# EUROPÄISCHE PATENTANMELDUNG

(11) **EP 4 810 361 A1**
(43) Veröffentlichungstag der Anmeldung: **23.09.2026**
(21) Anmeldenummer: 25164365.6
(22) Anmeldetag: 18.03.2025
(51) Int. Cl.: B62J 15/00, B62J 11/19

(54) **RADSCHUTZVORRICHTUNG FÜR EIN FAHRRAD**

(71) Anmelder: SKS metaplast Scheffer-Klute GmbH, 59846 Sundern (DE)
(72) Erfinder: KORDES, Sven, 59846 Sundern (DE)
(74) Vertreter: Fritz Patent- und Rechtsanwälte PartmbB

(57) **Zusammenfassung**

Radschutzvorrichtung für ein Fahrrad, umfassend einen Radschützer (1) mit einer Oberseite und einer Unterseite, wobei der Radschützer (1) dazu eingerichtet ist, so an dem Fahrrad angebracht zu werden, dass er sich zumindest abschnittsweise oberhalb eines Rades des Fahrrads erstreckt und dabei die Unterseite dem Rad zugewandt ist, wobei an der Unterseite des Radschützers (1) eine zumindest teilweise offen ausgebildete Kabelaufnahme (5) für ein Kabel (4) vorgesehen ist, sowie weiterhin umfassend mindestens eine Klammer (3) und mindestens eine Klammerhalterung (2), die an der Unterseite des Radschützers (1) angebracht ist, wobei die mindestens eine Klammer (3) dazu eingerichtet ist, so mit der mindestens einen Klammerhalterung (2) verbunden zu werden, dass ein in die Kabelaufnahme (5) eingebrachtes Kabel (4) gehalten wird, und wobei die mindestens eine Klammerhalterung (2) stoffschlüssig mit dem Radschützer (1) verbunden ist.

## Beschreibung

Die vorliegende Erfindung betrifft eine Radschutzvorrichtung für ein Fahrrad gemäß dem Oberbegriff des Anspruchs 1.

Eine Radschutzvorrichtung der vorgenannten Art ist aus der DE 10 2021 126 788 A1 bekannt. Die darin beschriebene Radschutzvorrichtung umfasst einen Radschützer und eine Mehrzahl von Klammern, die in Längsrichtung des Radschützers beabstandet zueinander angeordnet sein können. Der Radschützer weist zwei jeweils als Klammerhalterung dienende stegförmige Rippen auf, die sich in Längsrichtung des Radschützers erstrecken und in Querrichtung des Radschützers zueinander beabstandet sind. Die stegförmigen Rippen bilden eine zumindest teilweise offen ausgebildete Kabelaufnahme für ein Kabel, wobei eine jede der Klammern dazu eingerichtet ist, so mit den Klammerhalterungen verbunden zu werden, dass ein in die Kabelaufnahme eingebrachtes Kabel in dem Zwischenraum zwischen den beiden Klammerhalterungen und der Klammer gehalten wird. Der Radschützer ist insbesondere als Kunststoff-Extrusionsteil ausgebildet, wobei sich die als Klammerhalterung dienenden stegförmigen Rippen in Längsrichtung im Wesentlichen über die gesamte Unterseite des Radschützers erstrecken.

Als nachteilig bei einer derartigen Gestaltung erweist sich, dass es Radschützer gibt, bei denen eine Herstellung mit angeformten Rippen beispielsweise aus fertigungstechnischen Gründen nicht möglich oder unwirtschaftlich ist. Ein Beispiel dafür sind Radschützer, die aus Metallblech gebogen werden.

Das der vorliegenden Erfindung zugrundeliegende Problem ist daher die Schaffung einer Radschutzvorrichtung der eingangs genannten Art, die geeignet ist, für Radschützer, insbesondere für nicht als Kunststoff-Extrusionsteil ausgebildete Radschützer, eine von außen möglichst nicht sichtbare Kabelhalterung zu realisieren.

Dies wird erfindungsgemäß durch eine Radschutzvorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die mindestens eine Klammerhalterung stoffschlüssig mit dem Radschützer verbunden ist. Beispielsweise kann die stoffschlüssige Verbindung zwischen der mindestens einen Klammerhalterung und dem Radschützer eine Klebeverbindung, eine Schweißverbindung oder eine Ultraschallschweißverbindung sein. Dadurch kann die mindestens eine Klammerhalterung auch an Radschützern angebracht werden, die nicht als Kunststoff-Extrusionsteil ausgebildet sind. Dabei kann die Kabelaufnahme durch mindestens einen Abschnitt der Unterseite des Radschützers und/oder die mindestens eine Klammer und/oder die mindestens eine Klammerhalterung gebildet werden.

Es besteht die Möglichkeit, dass der Radschützer langgestreckt ist und eine Längsrichtung sowie eine dazu senkrechte Querrichtung aufweist, insbesondere wobei der Radschützer sich in seiner Längsrichtung zumindest abschnittsweise in Umfangsrichtung des Rades des Fahrrads erstreckt, vorzugsweise wobei der Radschützer zumindest abschnittsweise teiltorusförmig ausgebildet ist. Dabei kann die mindestens eine Klammerhalterung sich in Längsrichtung und in Querrichtung des Radschützers erstrecken.

Es kann vorgesehen sein, dass die mindestens eine Klammerhalterung mindestens einen Halteabschnitt aufweist, der zur Verbindung mit der mindestens einen Klammer dient, insbesondere wobei die mindestens eine Klammerhalterung zwei Halteabschnitte aufweist, die zueinander beabstandet sind, vorzugsweise wobei die beiden Halteabschnitte in Querrichtung des Radschützers zueinander beabstandet sind. Dabei kann der mindestens eine Halteabschnitt als Rippe ausgebildet sein, die sich in Längsrichtung des Radschützers erstreckt. Durch die Ausbildung der beiden in Querrichtung des Radschützers zueinander beabstandeten Halteabschnitten als sich in Längsrichtung des Radschützers erstreckende Rippen ergibt sich zwischen den zueinander beabstandeten Rippen eine Kabelaufnahme, die auf der dem Rad zugewandten Seite zumindest teilweise von der mindestens einen Klammer abgedeckt werden kann.

Es besteht die Möglichkeit, dass der mindestens eine Halteabschnitt auf der von dem Radschützer abgewandten Seite eine Verdickung aufweist, insbesondere wobei die Verdickung an dem von dem Radschützer abgewandten Ende der Rippe angeordnet ist.

Es kann vorgesehen sein, dass die mindestens eine Klammer mindestens eine Aufnahme für den mindestens einen Halteabschnitt der mindestens einen Klammerhalterung aufweist, insbesondere wobei die mindestens eine Klammer zwei Aufnahmen für die beiden Halteabschnitte der mindestens einen Klammerhalterung aufweist. Dabei kann die Aufnahme dazu eingerichtet sein, mit dem Halteabschnitt eine formschlüssige Verbindung einzugehen. Insbesondere kann die mindestens eine Aufnahme mindestens ein Rastelement aufweisen, das dazu eingerichtet ist, die Verdickung des mindestens einen Halteabschnitts zu hintergreifen. Die dadurch realisierte formschlüssige Verbindung zwischen der Klammer und der Klammerhalterung ermöglicht eine dauerhaft sichere Befestigung der Klammer. Eine derartige formschlüssige Verbindung kann mit üblichen Fertigungstoleranzen hergestellt werden, so dass eine kostengünstige Herstellung möglich ist. Weiter kann die formschlüssige Verbindung auch einfach wieder gelöst werden. Das mindestens eine Rastelement der Klammer kann elastisch ausgebildet sein, so dass es sich beim Aufstecken der Klammer um die Verdickung verformt und dann einrastet.

Es besteht die Möglichkeit, dass die mindestens eine Klammerhalterung einen Verbindungssteg aufweist, der die beiden Halteabschnitte miteinander verbindet, insbesondere wobei auf der dem Radschützer zugewandten Seite des Verbindungsstegs zumindest abschnittsweise ein Bereich für die stoffschlüssige Verbindung der Klammerhalterung mit dem Radschützer angeordnet ist. Es besteht weiterhin die Möglichkeit, dass die mindestens eine Klammer einen Verbindungssteg aufweist, der die beiden Aufnahmen miteinander verbindet, insbesondere wobei im verbundenen Zustand von Klammer und Klammerhalterung ein in die Kabelaufnahme eingebrachtes Kabel zwischen dem Verbindungssteg der Klammerhalterung und dem Verbindungssteg der Klammer angeordnet ist.

Es kann vorgesehen sein, dass die Radschutzvorrichtung eine Mehrzahl von Klammerhalterungen umfasst, insbesondere wobei die Klammerhalterungen in Längsrichtung des Radschützers zueinander beabstandet sind. Es kann weiterhin vorgesehen sein, dass die Radschutzvorrichtung eine Mehrzahl von Klammern aufweist, insbesondere wobei die Klammern in Längsrichtung des Radschützers zueinander beabstandet sind. Dabei kann jeder der Klammerhalterungen genau eine der Klammern zugeordnet sein, wobei jede der Klammern dazu eingerichtet ist, mit der zugeordneten Klammerhalterung verbunden zu werden. Durch eine Mehrzahl von über die Längsrichtung des Radschützers verteilte Klammerhalterungen und Klammern ergibt sich eine bessere Halterung eines in der Kabelaufnahme befindlichen Kabels.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine Seitenansicht einer erfindungsgemäßen Radschutzvorrichtung;
- Fig. 2: eine Ansicht von unten auf die Radschutzvorrichtung gemäß Fig. 1;
- Fig. 3: einen Schnitt gemäß den Pfeilen III - III in Fig. 1;
- Fig. 4: ein Detail gemäß dem Pfeil IV in Fig. 2
- Fig. 5: ein Detail gemäß dem Pfeil V in Fig. 3.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiele aufweist.

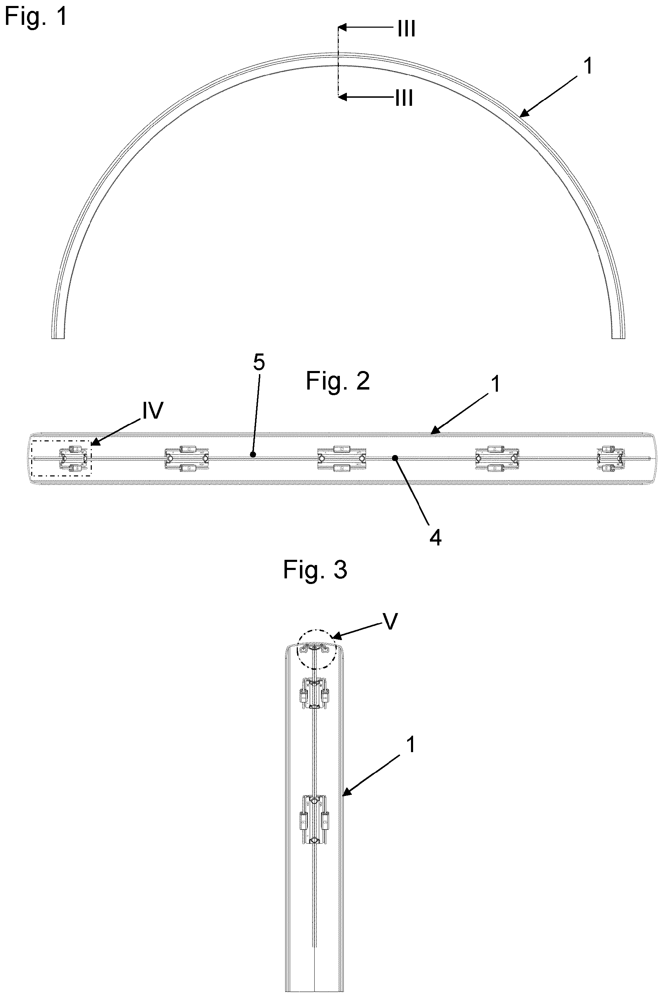

Die in den Figuren abgebildete Ausführungsform einer Radschutzvorrichtung umfasst einen Radschützer 1, eine Mehrzahl von Klammerhalterungen 2 und eine Mehrzahl von Klammern 3. Die Klammerhalterungen 2 und die Klammern 3 können zusammen mit dem Radschützer 1 ein Kabel 4 in einer Kabelaufnahme 5 halten (siehe beispielsweise Fig. 2, Fig. 4 und Fig. 5).

Der Radschützer 1 kann zumindest teilweise aus Kunststoff oder aus Metall bestehen. Die Klammerhalterungen 2 können aus Kunststoff bestehen. Es besteht durchaus die Möglichkeit, die Klammerhalterungen 2 aus einem anderen Material, wie beispielsweise Metall, auszubilden. Die Klammern 3 können als Stanzbiegeteile aus Federstahl ausgebildet sein. Es besteht durchaus die Möglichkeit, die Klammern 3 aus einem anderen Material, wie beispielsweise Kunststoff, und/oder durch ein anderes Fertigungsverfahren herzustellen.

Der Radschützer 1 ist als Radschützer für ein Hinterrad eines Fahrrads, ausgebildet. Es besteht jedoch durchaus auch die Möglichkeit, den Radschützer 1 für ein Vorderrad eines Fahrrads vorzusehen.

Der Radschützer 1 ist im Wesentlichen teiltorusförmig ausgebildet und folgt abschnittsweise der Kontur eines Rades des Fahrrads (siehe Fig. 1). Der Radschützer 1 weist eine Oberseite und eine Unterseite auf, wobei die Unterseite im an dem Fahrrad angebrachten Zustand des Radschützers 1 dem Rad zugewandt ist. Der Radschützer 1 ist langgestreckt und weist eine Längsrichtung sowie eine dazu senkrechte Querrichtung auf. Dabei entspricht die Längsrichtung im Wesentlichen der Umfangsrichtung des nicht abgebildeten Rades. Aufgrund der teiltorusförmigen Ausbildung weist der Radschützer 1 einen im Wesentlichen C-förmigen Querschnitt auf.

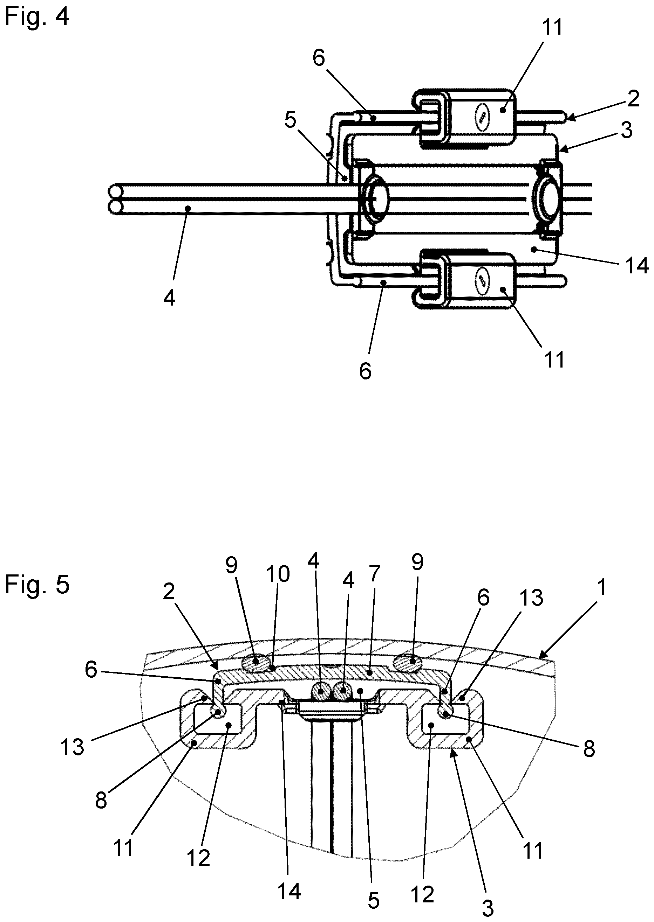

Die in den Figuren abgebildete Ausführungsform umfasst fünf Klammerhalterungen 2 und fünf Klammern 3, die jeweils in Längsrichtung des Radschützers 1 zueinander beabstandet sind. Dabei ist jeder der Klammerhalterungen 2 genau eine der Klammern 3 zugeordnet, wobei jede der Klammern 3 dazu eingerichtet ist, mit der zugeordneten Klammerhalterung 2 verbunden zu werden. Die Klammern 3 weisen in Längsrichtung und in Querrichtung eine Ausdehnung auf, die im Wesentlichen der Ausdehnung der Klammerhalterungen 2 in Längsrichtung und in Querrichtung entspricht (siehe Fig. 4).

Es besteht durchaus die Möglichkeit, mehr oder weniger als fünf Klammerhalterungen 2 und mehr oder weniger als fünf Klammern 3 vorzusehen.

Eine jede der Klammerhalterungen 2 ist etwa U-förmig ausgebildet und weist zwei äußere als Halteabschnitte 6 dienende U-Schenkel und einen die Halteabschnitte 6 miteinander verbindenden Verbindungssteg 7 auf (siehe Fig. 5). Dabei sind die beiden Halteabschnitte 6 in Querrichtung des Radschützers 1 zueinander beabstandet. Jeder der Halteabschnitte 6 ist als Rippe ausgebildet, die sich in Längsrichtung des Radschützers 1 erstreckt (siehe Fig. 4). Dabei ist an dem von dem Radschützer 1 abgewandten Ende des als Rippe ausgebildeten Halteabschnitts 6 eine Verdickung 8 angeordnet (siehe Fig. 5).

Die Klammerhalterungen 2 sind mit dem Radschützer 1 verklebt. Dabei ist auf der dem Radschützer 1 zugewandten Seite des Verbindungsstegs 7 zumindest abschnittsweise Klebstoff 9 für die Verklebung der Klammerhalterungen 2 mit dem Radschützer 1 angeordnet. Für die Aufnahme des Klebstoffs 9 kann der Verbindungssteg 7 auf seiner dem Radschützer 1 zugewandten Seite geeignete Aussparungen 10 aufweisen.

Es besteht durchaus die Möglichkeit, anstelle einer Klebeverbindung eine andere stoffschlüssige Verbindung, wie beispielsweise eine Schweißverbindung oder eine Ultraschallschweißverbindung, zwischen den Klammerhalterungen 2 und dem Radschützer 1, insbesondere zwischen dem Verbindungssteg 7 und dem Radschützer 1, vorzusehen.

Eine jede der Klammern 3 weist zwei Aufnahmen 11 mit jeweils einem Aufnahmeraum 12 für den Halteabschnitt 6 der Klammerhalterung 2 auf. Die Aufnahmen 11 weisen einen im Wesentlichen U-förmigen Querschnitt auf, wobei an den Enden der beiden U-Schenkel elastische Rastelemente 13 angeordnet sind, die von den Enden der U-Schenkel nach innen in Richtung auf den gegenüberliegenden U-Schenkel ragen.

Im miteinander verbundenen Zustand der Klammer 3 mit der Klammerhalterung 3 ragen jeweils die Enden der Haltabschnitte 6 in die Aufnahmeräume 12 der Aufnahmen 11 hinein. Dabei hintergreifen die Rastelemente 13 die Verdickung 8 des jeweiligen Halteabschnitts 6, so dass sich eine formschlüssige Verbindung zwischen der Aufnahme 11 und dem Halteabschnitt 6 ergibt. Durch die elastische Ausbildung können sich die Rastelemente 13 bei dem Aufstecken der Klammer 3 auf die Klammerhalterung 2 um die Verdickung 8 verformen und dann hinter der Verdickung 8 einrasten.

Eine jede der Klammern 3 weist einen Verbindungssteg 14 auf, der die beiden Aufnahmen 11 miteinander verbindet (siehe Fig. 5). Im verbundenen Zustand von Klammer 3 und Klammerhalterung 2 wird ein in die Kabelaufnahme 5 eingebrachtes Kabel 4 zwischen dem Verbindungssteg 7 der Klammerhalterung 2 und dem Verbindungssteg 14 der Klammer 3 gehalten, insbesondere festgeklemmt.

## Patentansprüche

1. Radschutzvorrichtung für ein Fahrrad, umfassend
- einen Radschützer (1) mit einer Oberseite und einer Unterseite, wobei der Radschützer (1) dazu eingerichtet ist, so an dem Fahrrad angebracht zu werden, dass er sich zumindest abschnittsweise oberhalb eines Rades des Fahrrads erstreckt und dabei die Unterseite dem Rad zugewandt ist, wobei an der Unterseite des Radschützers (1) eine zumindest teilweise offen ausgebildete Kabelaufnahme (5) für ein Kabel (4) vorgesehen ist,
- mindestens eine Klammer (3), und
- mindestens eine Klammerhalterung (2), die an der Unterseite des Radschützers (1) angebracht ist, wobei die mindestens eine Klammer (3) dazu eingerichtet ist, so mit der mindestens einen Klammerhalterung (2) verbunden zu werden, dass ein in die Kabelaufnahme (5) eingebrachtes Kabel (4) gehalten wird,
**dadurch gekennzeichnet, dass** die mindestens eine Klammerhalterung (2) stoffschlüssig mit dem Radschützer (1) verbunden ist.

2. Radschutzvorrichtung nach Anspruch 1, **dadurch gekennzeichnet, dass** die stoffschlüssige Verbindung zwischen der mindestens einen Klammerhalterung (2) und dem Radschützer (1) eine Klebeverbindung, eine Schweißverbindung oder eine Ultraschallschweißverbindung ist.

3. Radschutzvorrichtung nach einem der Ansprüche 1 oder 2, **dadurch gekennzeichnet, dass** die Kabelaufnahme (5) durch mindestens einen Abschnitt der Unterseite des Radschützers (1) und/oder die mindestens eine Klammer (3) und/oder die mindestens eine Klammerhalterung (2) gebildet wird.

4. Radschutzvorrichtung nach einem der Ansprüche 1 bis 3, **dadurch gekennzeichnet, dass** der Radschützer (1) langgestreckt ist und eine Längsrichtung sowie eine dazu senkrechte Querrichtung aufweist, insbesondere wobei der Radschützer (1) sich in seiner Längsrichtung zumindest abschnittsweise in Umfangsrichtung des Rades des Fahrrads erstreckt, vorzugsweise wobei der Radschützer (1) zumindest abschnittsweise teiltorusförmig ausgebildet ist.

5. Radschutzvorrichtung nach Anspruch 4, **dadurch gekennzeichnet, dass** die mindestens eine Klammerhalterung (2) sich in Längsrichtung und in Querrichtung des Radschützers (1) erstreckt.

6. Radschutzvorrichtung nach einem der Ansprüche 1 bis 5, **dadurch gekennzeichnet, dass** die mindestens eine Klammerhalterung (2) mindestens einen Halteabschnitt (6) aufweist, der zur Verbindung mit der mindestens einen Klammer (3) dient, insbesondere wobei die mindestens eine Klammerhalterung (2) zwei Halteabschnitte (6) aufweist, die zueinander beabstandet sind, vorzugsweise wobei die beiden Halteabschnitte (6) in Querrichtung des Radschützers (1) zueinander beabstandet sind.

7. Radschutzvorrichtung nach Anspruch 6, **dadurch gekennzeichnet, dass** der mindestens eine Halteabschnitt (6) als Rippe ausgebildet ist, die sich in Längsrichtung des Radschützers (1) erstreckt.

8. Radschutzvorrichtung nach einem der Ansprüche 6 oder 7, **dadurch gekennzeichnet, dass** der mindestens eine Halteabschnitt (6) auf der von dem Radschützer (1) abgewandten Seite eine Verdickung (8) aufweist, insbesondere wobei die Verdickung (8) an dem von dem Radschützer (1) abgewandten Ende der Rippe angeordnet ist.

9. Radschutzvorrichtung nach einem der Ansprüche 1 bis 8, **dadurch gekennzeichnet, dass** die mindestens eine Klammer (3) mindestens eine Aufnahme (11) für den mindestens einen Halteabschnitt (6) der mindestens einen Klammerhalterung (2) aufweist, insbesondere wobei die mindestens eine Klammer (3) zwei Aufnahmen (11) für die beiden Halteabschnitte (6) der mindestens einen Klammerhalterung (2) aufweist.

10. Radschutzvorrichtung nach Anspruch 9, **dadurch gekennzeichnet, dass** die Aufnahme (11) dazu eingerichtet ist, mit dem Halteabschnitt (6) eine formschlüssige Verbindung einzugehen, insbesondere wobei die mindestens eine Aufnahme (11) mindestens ein Rastelement (13) aufweist, das dazu eingerichtet ist, die Verdickung (8) des mindestens einen Halteabschnitts zu hintergreifen.

11. Radschutzvorrichtung nach einem der Ansprüche 5 bis 10, **dadurch gekennzeichnet, dass** die mindestens eine Klammerhalterung (2) einen Verbindungssteg (7) aufweist, der die beiden Halteabschnitte (6) miteinander verbindet, insbesondere wobei auf der dem Radschützer (1) zugewandten Seite des Verbindungsstegs (7) zumindest abschnittsweise ein Bereich für die stoffschlüssige Verbindung der Klammerhalterung (2) mit dem Radschützer (1) angeordnet ist.

12. Radschutzvorrichtung nach einem der Ansprüche 8 bis 11, **dadurch gekennzeichnet, dass** die mindestens eine Klammer (3) einen Verbindungssteg (14) aufweist, der die beiden Aufnahmen (11) miteinander verbindet, insbesondere wobei im verbundenen Zustand von Klammer (3) und Klammerhalterung (2) ein in die Kabelaufnahme (5) eingebrachtes Kabel (4) zwischen dem Verbindungssteg (7) der Klammerhalterung (2) und dem Verbindungssteg (14) der Klammer (3) angeordnet ist.

13. Radschutzvorrichtung nach einem der Ansprüche 1 bis 12, **dadurch gekennzeichnet, dass** die Radschutzvorrichtung eine Mehrzahl von Klammerhalterungen (2) umfasst, insbesondere wobei die Klammerhalterungen (2) in Längsrichtung des Radschützers (1) zueinander beabstandet sind.

14. Radschutzvorrichtung nach einem der Ansprüche 1 bis 13, **dadurch gekennzeichnet, dass** die Radschutzvorrichtung eine Mehrzahl von Klammern (3) aufweist, insbesondere wobei die Klammern (3) in Längsrichtung des Radschützers (1) zueinander beabstandet sind.

15. Radschutzvorrichtung nach Anspruch 14, **dadurch gekennzeichnet, dass** jeder der Klammerhalterungen (2) genau eine der Klammern (3) zugeordnet ist, wobei jede der Klammern (3) dazu eingerichtet ist, mit der zugeordneten Klammerhalterung (2) verbunden zu werden.
